# EUROPEAN PATENT APPLICATION

(11) **EP 4 231 752 A1**
(43) Date of publication of application: **23.08.2023**
(21) Application number: 20957068.8
(22) Date of filing: 14.10.2020
(51) Int. Cl.: H04W 72/12, H04W 36/00

(54) **METHOD FOR TRANSMITTING AND RECEIVING BEAM MEASUREMENT RESULT REPORT, DEVICE, AND MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2020/120956
(87) International publication number: WO 2022/077287

(57) **Abstract**

The present disclosure relates to a method for transmitting and receiving a beam measurement result report, a device, a terminal, equipment, and a medium, and relates to the technical field of communications. The method comprises: transmitting a beam measurement result report, the beam measurement result report comprising a beam measurement result report of at least one beam group, and at least one beam in the at least one beam group corresponding to an adjacent cell of a terminal. The method favors increased data transmission performance.

## Description

### TECHNICAL FIELD

The disclosure relates to the field of communication technology, in particular to methods and apparatuses for sending and receiving a beam measurement result report, and a medium.

### BACKGROUND

In new radio (NR) technology, the communication frequency band has a high frequency, for example, in Frequency Range 2 (FR2), the communication frequency is higher than 6GHz. Due to fast attenuation of high-frequency channels, beam-based transmission and reception may be used to ensure a coverage area.

In related art, a terminal communicates with a network device through only a serving cell. After measuring the beam of the serving cell, the terminal sends a beam measurement result report to the network device. The network device selects an appropriate beam of the serving cell based on the beam measurement result reported by the terminal, and uses the selected beam for data transmission with the terminal.

When the terminal is located at a location where the coverage area of the serving cell overlaps with a coverage area of a neighbor cell, both the beams of the serving cell and the neighbor cell can provide well services for the terminal. The data transmission performance of the terminal may be limited when selecting the beam for the terminal only based on the beam measurement result report of the serving cell of the terminal.

### SUMMARY

Embodiments of the disclosure provides methods and apparatuses for sending and receiving a beam measurement result report, a terminal, a device and a medium. The technical solution is as follows.

According to an aspect of embodiments of the disclosure, a method for sending a beam measurement result report is provided. The method includes: sending a beam measurement result report, in which the beam measurement result report includes a beam measurement result report of at least one beam group, and at least one beam in the at least one beam group corresponds to a neighbor cell of a terminal.

Optionally, at least two beams within one beam group in the at least one beam group are supported to be simultaneously transmitted by the terminal.

Optionally, the at least two beams within the one beam group in the at least one beam group correspond to at least two different transmission and reception points TRPs, and the at least two TRPs correspond to a same serving cell, or the at least two TRPs include a TRP corresponding to a serving cell and a TRP corresponding to the neighbor cell, or the at least two TRPs correspond to the neighbor cell.

Optionally, the beam measurement result report includes beam measurement result reports of at least two beam groups, and beams from different beam groups in the at least two beam groups are supported to be simultaneously transmitted by the terminal.

Optionally, the beam group includes beams received by a same antenna panel of the terminal.

Optionally, the beam measurement result report includes first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

Optionally, the first indication information includes an identification of an antenna panel of the terminal corresponding to a beam.

Optionally, the measurement result report includes an identification of a beam and a measurement result of the beam, the identification of the beam includes an identification of a reference signal corresponding to the beam.

Optionally, the identification of the beam includes at least one of a cell identification corresponding to the beam and a TRP identification corresponding to the beam.

Optionally, the measurement result of the beam includes at least one of a layerl-reference signal received power L1-RSRP and a layerl-signal to interference plus noise ratio L1-SINR.

Optionally, the measurement result of the beam includes interference indication information, and the interference indication information is configured to indicate an interference situation between at least two beams within a same beam group.

Optionally, the interference indication information includes: first interference indication information for indicating an interference situation that a first beam suffers interferences including interference from a second beam, and/or second interference indication information for indicating an interference situation that the first beam suffers interferences other than the interference from a second beam, the first beam being any one of the at least two beams, the second beam being another one of the at least two beams other than the first beam.

Optionally, the method further includes: receiving beam report configuration information, in which the beam report configuration information is configured to instruct the terminal to give priority to sending a beam measurement result report of a first beam group, the first beam group including beams of different TRPS, or the first beam group including beams of different cells, or the first beam group including beams of a same TRP.

According to an aspect of embodiments of the disclosure, a method for receiving a beam measurement result report is provided. The method includes: receiving a beam measurement result report, in which the beam measurement result report includes a beam measurement result report of at least one beam group, and at least one beam in the at least one beam group corresponds to a neighbor cell of a terminal.

Optionally, at least two beams within one beam group in the at least one beam group are supported to be simultaneously transmitted by the terminal.

Optionally, the at least two beams within the one beam group in the at least one beam group correspond to at least two different transmission and reception points TRPs, and the at least two TRPs correspond to a same serving cell, or the at least two TRPs include a TRP corresponding to a serving cell and a TRP corresponding to the neighbor cell, or the at least two TRPs correspond to the neighbor cell.

Optionally, the beam measurement result report includes beam measurement result reports of at least two beam groups, and beams from different beam groups in the at least two beam groups are supported to be simultaneously transmitted by the terminal.

Optionally, the beam group includes beams received by a same antenna panel of the terminal.

Optionally, the beam measurement result report includes first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

Optionally, the first indication information includes an identification of an antenna panel of the terminal corresponding to a beam.

Optionally, the measurement result report includes an identification of a beam and a measurement result of the beam, the identification of the beam includes an identification of a reference signal corresponding to the beam.

Optionally, the identification of the beam includes at least one of a cell identification corresponding to the beam and a TRP identification corresponding to the beam.

Optionally, the measurement result of the beam includes at least one of a layerl-reference signal received power L1-RSRP and a layerl-signal to interference plus noise ratio L1-SINR.

Optionally, the measurement result of the beam includes interference indication information, and the interference indication information is configured to indicate an interference situation between at least two beams supported to be simultaneously transmitted by the terminal.

Optionally, the interference indication information includes: first interference indication information for indicating an interference situation that a first beam suffers interferences including interference from a second beam, and/or second interference indication information for indicating an interference situation that the first beam suffers interferences other than the interference from a second beam, the first beam being any one of the at least two beams, the second beam being another one of the at least two beams other than the first beam.

Optionally, the method further includes: sending beam report configuration information, in which the beam report configuration information is configured to instruct the terminal to give priority to sending a beam measurement result report of a first beam group, the first beam group including beams of different TRPS, or the first beam group including beams of different cells, or the first beam group including beams of a same TRP.

According to an aspect of embodiments of the disclosure, an apparatus for sending a beam measurement result report is provided. The apparatus includes: a sending module, configured to send a beam measurement result report, in which the beam measurement result report includes a beam measurement result report of at least one beam group, and at least one beam in the at least one beam group corresponds to a neighbor cell of a terminal.

Optionally, at least two beams within one beam group in the at least one beam group are supported to be simultaneously transmitted by the terminal.

Optionally, the at least two beams within the one beam group in the at least one beam group correspond to at least two different transmission and reception points TRPs, and the at least two TRPs correspond to a same serving cell, or the at least two TRPs include a TRP corresponding to a serving cell and a TRP corresponding to the neighbor cell, or the at least two TRPs correspond to the neighbor cell.

Optionally, the beam measurement result report includes beam measurement result reports of at least two beam groups, and beams from different beam groups in the at least two beam groups are supported to be simultaneously transmitted by the terminal.

Optionally, the beam group includes beams received by a same antenna panel of the terminal.

Optionally, the beam measurement result report includes first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

Optionally, the first indication information includes an identification of an antenna panel of the terminal corresponding to a beam.

Optionally, the measurement result report includes an identification of a beam and a measurement result of the beam, the identification of the beam includes an identification of a reference signal corresponding to the beam.

Optionally, the identification of the beam includes at least one of a cell identification corresponding to the beam and a TRP identification corresponding to the beam.

Optionally, the measurement result of the beam includes at least one of a layerl-reference signal received power L1-RSRP and a layerl-signal to interference plus noise ratio L1-SINR.

Optionally, the measurement result of the beam includes interference indication information, and the interference indication information is configured to indicate an interference situation between at least two beams within a same beam group.

Optionally, the interference indication information includes: first interference indication information for indicating an interference situation that a first beam suffers interferences including interference from a second beam, and/or second interference indication information for indicating an interference situation that the first beam suffers interferences other than the interference from a second beam, the first beam being any one of the at least two beams, the second beam being another one of the at least two beams other than the first beam.

Optionally, the apparatus further includes:
a receiving module, configured to receive beam report configuration information, in which the beam report configuration information is configured to instruct the terminal to give priority to sending a beam measurement result report of a first beam group, the first beam group including beams of different TRPS, or the first beam group including beams of different cells, or the first beam group including beams of a same TRP.

According to an aspect of embodiments of the disclosure, an apparatus for receiving a beam measurement result report is provided. The apparatus includes:
a receiving module, configured to receive a beam measurement result report, in which the beam measurement result report includes a beam measurement result report of at least one beam group, and at least one beam in the at least one beam group corresponds to a neighbor cell of a terminal.

Optionally, at least two beams within one beam group in the at least one beam group are supported to be simultaneously transmitted by the terminal.

Optionally, the at least two beams within the one beam group in the at least one beam group correspond to at least two different transmission and reception points TRPs, and the at least two TRPs correspond to a same serving cell, or the at least two TRPs include a TRP corresponding to a serving cell and a TRP corresponding to the neighbor cell, or the at least two TRPs correspond to the neighbor cell.

Optionally, the beam measurement result report includes beam measurement result reports of at least two beam groups, and beams from different beam groups in the at least two beam groups are supported to be simultaneously transmitted by the terminal.

Optionally, the beam group includes beams received by a same antenna panel of the terminal.

Optionally, the beam measurement result report includes first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

Optionally, the first indication information includes an identification of an antenna panel of the terminal corresponding to a beam.

Optionally, the measurement result report includes an identification of a beam and a measurement result of the beam, the identification of the beam includes an identification of a reference signal corresponding to the beam.

Optionally, the identification of the beam includes at least one of a cell identification corresponding to the beam and a TRP identification corresponding to the beam.

Optionally, the measurement result of the beam includes at least one of a layerl-reference signal received power L1-RSRP and a layerl-signal to interference plus noise ratio L1-SINR.

Optionally, the measurement result of the beam includes interference indication information, and the interference indication information is configured to indicate an interference situation between at least two beams supported to be simultaneously transmitted by the terminal.

Optionally, the interference indication information includes: first interference indication information for indicating an interference situation that a first beam suffers interferences including interference from a second beam, and/or second interference indication information for indicating an interference situation that the first beam suffers interferences other than the interference from a second beam, the first beam being any one of the at least two beams, the second beam being another one of the at least two beams other than the first beam.

Optionally, the apparatus further includes:
a sending module, configured to send beam report configuration information, in which the beam report configuration information is configured to instruct the terminal to give priority to sending a beam measurement result report of a first beam group, the first beam group including beams of different TRPS, or the first beam group including beams of different cells, or the first beam group including beams of a same TRP.

According to an aspect of embodiments of the disclosure, a terminal is provided. The terminal includes:
a processor; and
a memory for storing executable instructions of the processor.

The processor is configured to load and execute the executable instructions to implement the method for sending a beam measurement result report according to any of above aspects.

According to an aspect of embodiments of the disclosure, a network device is provided. The network device includes:
a processor; and
a memory for storing executable instructions of the processor.

The processor is configured to load and execute the executable instructions to implement the method for receiving a beam measurement result report according to any of above aspects.

According to an aspect of embodiments of the disclosure, a computer-readable storage medium is provided. When instructions stored in the computer-readable storage medium are executed by a processor, the method for sending a beam measurement result report according to any of above aspects may be executed, or the method for receiving a beam measurement result report according to any of above aspects may be executed.

In embodiments of the disclosure, by including a beam measurement result report of at least one beam of the neighbor cell in the beam measurement result report, the network device can dynamically perform beam switch between beams of the serving cell and beams of the neighbor cell based on the beam measurement result report of the serving cell and the beam measurement result report of the neighbor cell in the beam measurement result report, thereby improving the data transmission performance of the terminal.

It should be understood that the general description above and the detailed description in the following are merely illustrative and explanatory, and do not limit this disclosure.

### BRIEF DESCRIPTION OF THE DRAWINGS

The accompanying drawings here are incorporated into the specification and form a part of the specification, showing embodiments that comply with the disclosure, and are used together with the specification to explain the principles of the disclosure.
FIG. 1 is a block diagram of communication system provided in an embodiment of the disclosure.
FIG. 2 is a flowchart of a method for sending a beam measurement result report according to an embodiment of the disclosure.
FIG. 3 is a flowchart of a method for receiving a beam measurement result report according to an embodiment of the disclosure.
FIG. 4 is a flowchart of method for transmitting a beam measurement result report according to an embodiment of the disclosure.
FIG. 5 is a schematic diagram of a signal transmission apparatus according to an embodiment of the disclosure.
FIG. 6 is a schematic diagram of a signal transmission apparatus according to an embodiment of the disclosure.
FIG. 7 is a block diagram of a terminal according to an embodiment of the disclosure.
FIG. 8 is a block diagram of a network device according to an embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Terms used herein in the embodiments of the disclosure are only for the purpose of describing specific embodiments, but should not be construed to limit the embodiments of the disclosure. As used in the description of the embodiments of the disclosure and the appended claims, "a" and "the" in singular forms mean including plural forms, unless clearly indicated in the context otherwise. It should also be understood that, as used herein, the term "and/or" represents containing any one and all possible combinations of one or more associated listed items.

It should be understood that, terms such as first, second or third may be used to describe various information in the embodiments of the disclosure, but the information is not limited by the above terms. The above terms are used to distinguish one type of information from the other type of information. For example, first information may be referred to as second information without departing from a scope of the present disclosure, and similarly, the second information may be referred to as the first information. As used herein, the term "if' may be construed to mean "when" or "upon" or "in response to determining" depending on the context.

It should be understood that, although steps are numbered for ease of understanding in the embodiments of the disclosure, these numbers do not represent an execution order of the steps, nor do they represent that steps numbered sequentially must be executed together. It should be understood that one or more of the steps numbered sequentially can be executed separately to solve a corresponding technical problem and implement a predetermined technical solution. Even if multiple steps are exemplary listed together in the accompanying drawings, it does not mean that these steps must be executed together. The accompanying drawings only exemplify these steps together for ease of understanding.

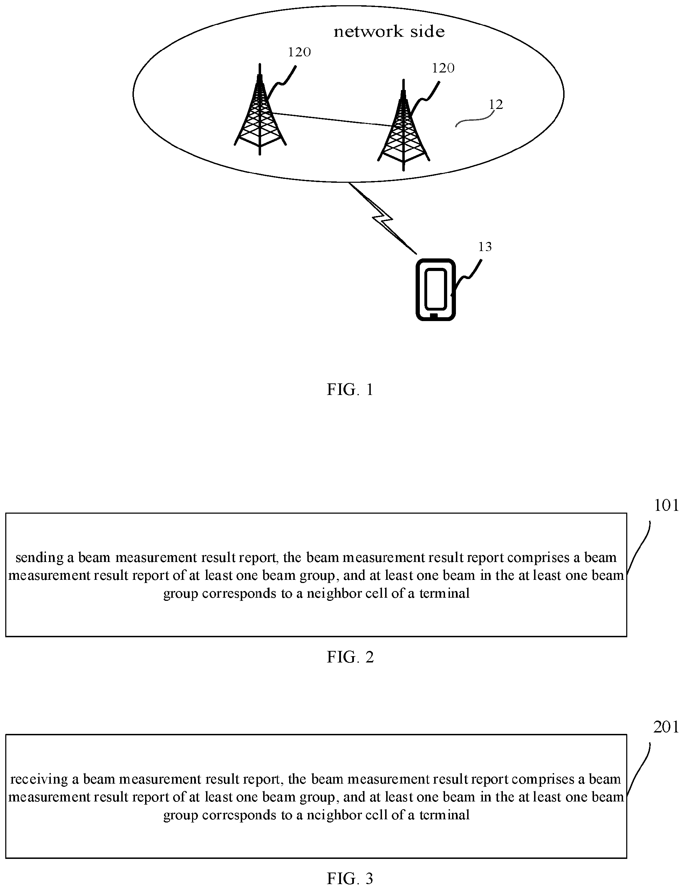

FIG. 1 block diagram of communication system provided in an embodiment of the disclosure. As illustrated in FIG. 1, the communication system may include a network side 12 and a terminal 13.

The network side 12 includes several network devices 120. The network device 120 can be a base station, which is a device deployed in an access network to provide wireless communication functions for terminals. The base station may be either a base station of a serving cell of the terminal 13 or a base station of a neighbor cell of the serving cell of the terminal 13. The base station may include various forms of macro base stations, micro base stations, relay stations, access points, transmission and reception points (TRPs) and so on. In systems using different wireless access technologies, names of devices having base-station functions may vary. For example, it may be called as a gNodeB or a gNB in a 5G new radio (NR) system. As the communication technology evolves, the description of "base station" may change. The network device 120 can also be a location management function (LMF).

The terminal 13 may include various handheld devices, vehicle-mounted devices, wearable devices, computing devices with wireless communication functions, or other processing devices connected to wireless modems, as well as various forms of user devices, mobile stations (MS), terminals, Internet of Things (IoT), industrial internet of things (IIoT), etc. For convenience of description, the devices mentioned above are collectively referred to as terminals. The network device 120 and the terminal 13 communicate with each other through some kind of air interface technology, such as a Uu interface.

In an embodiment of the disclosure, the network device 12 has one or more transmission and reception points (TRPs), also known as transmission points, each TRP having one or more antenna panels. Multiple TRPs can simultaneously transmit data with one terminal 12.

The terminal 13 has at least one antenna panel, and by adjusting parameters of the antenna panel, a direction of a receiving beam of the antenna panel can be changed.

The communication system and service scenarios described in the embodiments of the disclosure are intended to provide a clear explanation of the technical solution of the embodiments of the disclosure, and do not constitute a limitation on the technical solution provided by the embodiments of the disclosure. It should be known by those skilled in the art that, with the evolution of the communication system and the emergence of new service scenarios, the technical solution provided by the embodiments of the disclosure is also applicable to similar technical problems.

FIG. 2 is a flowchart of a method for sending a beam measurement result report according to an embodiment of the disclosure. The method may be executed by a terminal. As shown in FIG. 2, the method includes the following step.

In step 101, a beam measurement result report is sent, the beam measurement result report includes a beam measurement result report of at least one beam group, and at least one beam in the at least one beam group corresponds to a neighbor cell of a terminal.

In a possible implementation, at least two beams within the same beam group in the at least one beam group are beams that are supported to be simultaneously transmitted by the terminal.

Optionally, the at least two beams within the same beam group in the at least one beam group correspond to at least two different TRPs. The at least two different TRPs correspond to a same serving cell, or the at least two TRPs include a TRP corresponding to a serving cell and a TRP corresponding to the neighbor cell, or the at least two TRPs correspond to the neighbor cell.

In another possible implementation, the beam measurement result report includes beam measurement result reports of at least two beam groups, and beams from different beam groups in the at least two beam groups are beams that are supported to be simultaneously transmitted by the terminal.

In another possible implementation, the beam group includes beams received by the same antenna panel of the terminal.

Optionally, the beam measurement result report also includes first indication information. The first indication information is used to indicate beams transmitted simultaneously using filters in the same spatial domain of the terminal or using the same antenna panel of the terminal; and/or, the first indication information is used to indicate beams transmitted simultaneously using filters in different spatial domains of the terminal or using different antenna panels of the terminal.

For example, the first indication information includes an identification of an antenna panel of the terminal corresponding to a beam.

Optionally, the measurement result report includes an identification of a beam and a measurement result of the beam. The identification of the beam includes an identification of a reference signal corresponding to the beam.

Optionally, the identification of the beam also includes at least one of a cell identification corresponding to the beam and a TRP identification corresponding to the beam.

Optionally, the measurement result of the beam includes at least one of a layer 1-reference signal received power (L1-RSRP) and a layerl-signal to interference plus noise ratio (L1-SINR).

Optionally, the measurement result of the beam also includes interference indication information. The interference indication information is used to indicate an interference situation between at least two beams within the same beam group.

Optionally, the interference indication information includes first interference indication information for indicating an interference situation that a first beam suffers interferences including interference from a second beam, and/or second interference indication information for indicating an interference situation that the first beam suffers interferences other than the interference from a second beam. The first beam is any one of the at least two beams, and the second beam is another one of the at least two beams other than the first beam.

Optionally, the method also includes receiving beam report configuration information. The beam report configuration information is used to instruct the terminal to give priority to sending a beam measurement result report of a first beam group. The first beam group includes beams of different TRPs, or the first beam group includes beams of different cells, or the first beam group includes beams of the same TRP.

It is worth noting that the abovementioned step 101 can be combined with any of the above optional steps.

FIG. 3 is a flowchart of a method for receiving a beam measurement result report according to an embodiment of the disclosure. The method may be executed by a network device. As shown in FIG. 3, the method includes the following step.

In step 201, a beam measurement result report is received, the beam measurement result report includes a beam measurement result report of at least one beam group, and at least one beam in the at least one beam group corresponds to a neighbor cell of a terminal.

In a possible implementation, at least two beams within the same beam group in the at least one beam group are beams that are supported to be simultaneously transmitted by the terminal.

Optionally, the at least two beams within the same beam group in the at least one beam group correspond to at least two different TRPs. The at least two different TRPs correspond to a same serving cell, or the at least two TRPs include a TRP corresponding to a serving cell and a TRP corresponding to the neighbor cell, or the at least two TRPs correspond to the neighbor cell.

In another possible implementation, the beam measurement result report includes beam measurement result reports of at least two beam groups, and beams from different beam groups in the at least two beam groups are beams that are supported to be simultaneously transmitted by the terminal.

In another possible implementation, the beam group includes beams received by the same antenna panel of the terminal.

Optionally, the beam measurement result report also includes first indication information. The first indication information is used to indicate beams transmitted simultaneously using filters in the same spatial domain of the terminal or using the same antenna panel of the terminal; and/or, the first indication information is used to indicate beams transmitted simultaneously using filters in different spatial domains of the terminal or using different antenna panels of the terminal.

For example, the first indication information includes an identification of an antenna panel of the terminal corresponding to a beam.

Optionally, the measurement result report includes an identification of a beam and a measurement result of the beam. The identification of the beam includes an identification of a reference signal corresponding to the beam.

Optionally, the identification of the beam also includes at least one of a cell identification corresponding to the beam and a TRP identification corresponding to the beam.

Optionally, the measurement result of the beam includes at least one of a L1-RSRP and a L1-SINR.

Optionally, the measurement result of the beam also includes interference indication information. The interference indication information is used to indicate an interference situation between at least two beams within the same beam group.

Optionally, the interference indication information includes first interference indication information for indicating an interference situation that a first beam suffers interferences including interference from a second beam, and/or second interference indication information for indicating an interference situation that the first beam suffers interferences other than the interference from the second beam. The first beam is any one of the at least two beams, and the second beam is another one of the at least two beams other than the first beam.

Optionally, the method also includes sending beam report configuration information. The beam report configuration information is used to instruct the terminal to give priority to sending a beam measurement result report of a first beam group. The first beam group includes beams of different TRPs, or the first beam group includes beams of different cells, or the first beam group includes beams of the same TRP.

It is worth noting that the abovementioned step 201 can be combined with any of the above optional steps.

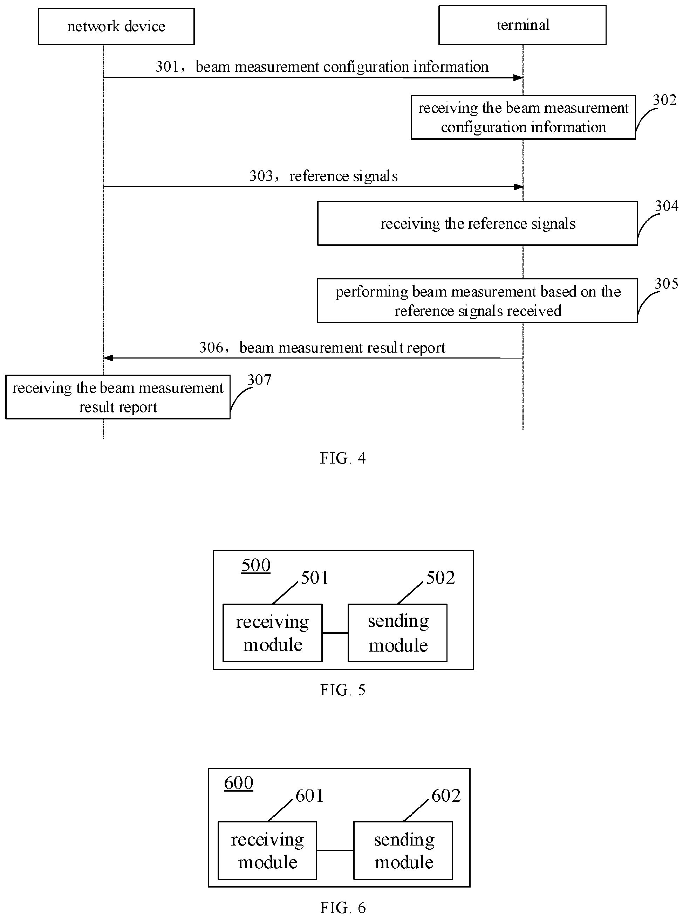

FIG. 4 is a flowchart of method for transmitting a beam measurement result report according to an embodiment of the disclosure. The method may be executed by both a network device and a terminal. As shown in FIG. 4, the method includes the following steps.

In step 301, the network device sends beam measurement configuration information.

The beam measurement configuration information includes reference signal resource configuration information. The reference signal resource configuration information includes at least one reference signal resource configuration set, and each reference signal resource configuration set includes N configurations of a reference signal resource. N is an integer greater than 1.

In an embodiment of the disclosure, the reference signal resource is a downlink reference signal resource, that is, a reference signal is sent by the network device and received by the terminal.

Optionally, the configurations of the reference signal resource includes at least one of the following: a reference signal identification corresponding to the reference signal resource, a time domain resource of the reference signal resource, a frequency domain resource of the reference signal resource, and the number of antenna ports of the reference signal resource.

In an embodiment of the disclosure, the reference signal resource configuration information also includes an identification of a reference signal. Optionally, the reference signal resource configuration information also includes a cell identification corresponding to the reference signal, a TRP identification corresponding to the reference signal, and so on.

Optionally, the beam measurement configuration information also includes beam report configuration information. The beam report configuration information is used to instruct the terminal to give priority to sending a beam measurement result report of a first beam group. The first beam group includes beams of different TRPs, or the first beam group includes beams of different cells, or the first beam group includes beams of the same TRP. The terminal is instructed to give priority to sending a beam measurement result report of a beam group required by the network device through the beam report configuration information, making the application more flexible.

Optionally, the network device sends the beam measurement configuration information through a radio resource control (RRC) message.

In step 302, the terminal receives the beam measurement configuration information.

In step 303, the network device provides beams in different directions through N TRPs and sends reference signals corresponding to N reference signal resources through the beams in different directions.

N is greater than 1 and N is an integer.

Optionally, the N TRPs belong to the same network device. For example, the N TRPs belong to a network device that serves a cell of the terminal. Or the N TRPs belong to different network devices. For example, some TRPs belong to the network device that serves the cell of the terminal, and some TRPs belong to a network device that serves a neighbor cell of the terminal.

Optionally, in some embodiments, each TRP contains only one panel. In other embodiments, each TRP contains multiple panels, and different panels of the same TRP can also provide beams in different directions. Therefore, the network device can use different panels to send the reference signals on different reference signal resources.

In step 305, different TRPs provide beams in different directions, and the reference signals sent on different beams are different, that is, each beam sends a reference signal corresponding to one of the N reference signal resources.

Optionally, each TRP corresponds to one cell, one cell corresponds to at least one TRP, and each cell corresponds to different TRPs. For example, a serving cell corresponds to TRP1 and TRP2, and a neighbor cell corresponds to TRP3.

In some examples, a portion of N TRPs corresponds to serving cells, and the other portion of the N TRPs corresponds to neighbor cells.

It should be noted that the embodiments of the disclosure does not limit the number of the neighbor cells, and the number of the neighbor cells can be one or more.

Optionally, the reference signal includes at least one of a synchronization signal and PBCH block (SSB), a channel state information - reference signal (CSI-RS), and a positioning reference signal (PRS).

In step 304, the terminal receives the reference signals.

In step 304, the terminal uses at least one antenna panel to receive the reference signals based on the beam measurement configuration information. In different transmission environments, for any reference signal sent by the network devices, the terminal may have one or more antenna panels receiving the reference signal, or the terminal may have no antenna panel that is capable of receiving the reference signal.

For the terminal, if the terminal receives two reference signals using different antenna panels, it indicates that the terminal supports to simultaneously transmit beams corresponding to the two reference signals. Alternatively, if the terminal receives two reference signals using the same receiving beam of the same antenna panel, it indicates that the terminal supports to simultaneously transmit beams corresponding to the two reference signals. Therefore, that the terminal supports to simultaneously transmit two beams refers to simultaneously transmitting through different antenna panels or simultaneously transmitting through the same antenna panel.

In step 305, the terminal performs beam measurement based on the received reference signals and obtains measurement results of beams corresponding the respective reference signals.

For example, a measurement result of a beam includes at least one of a layer 1-reference signal received power (L1-RSRP) and a layer 1-signal to interference plus noise ratio (L1-SINR).

After the beam measurement, the terminal may store identifications of the reference signals and the corresponding measurement results for the convenience of generating a beam measurement result report in the future.

Optionally, the measurement result of the beam also include interference indication information, which is used to indicate an interference situation between at least two beams within the same beam group.

For example, the interference indication information includes first interference indication information used to indicate an interference situation that a first beam suffers interferences including interference from a second beam, and/or second interference indication information for indicating an interference situation that the first beam suffers interferences other than the interference from a second beam. The first beam is any one of the at least two beams, and the second beam is another one of the at least two beams other than the first beam.

In some examples, both the first interference indication information and the second interference indication information are L1-SINR values. For example, the interference indication information is equal to a sum of a noise power and a value of a received power of the first beam divided by an interference value. An interference value from the second beam among interference values in the first interference indication information is greater than 0, that is, a transmission power of the network device in a direction of the second beam is greater than 0. The interference value from the second beam among interference values in in the second interference indication information is equal to 0, that is, a transmission power of the network device in the direction of the second beam is equal to 0. The interference value from the second beam is equal to a received power of the second beam.

In other examples, both the first interference indication information and the second interference indication information are interference values. For example, an interference value from the second beam among interference values in the first interference indication information is greater than 0, and the interference value from the second beam among interference values in the second interference indication information is equal to 0. The interference value from the second beam is equal to the received power of the second beam.

By including the interference indication information in the beam measurement result report, the network device can determine whether to use at least two beams within the same beam group to perform data transmission with the terminal simultaneously, and whether information content sent on the two beams are the same when using the at least two beams within the same beam group to perform data transmission with the terminal simultaneously, thereby further improving data transmission performance. For example, if the interference indication information indicates that the first beam is strongly interfered by the second beam, only the first or second beam is used for data transmission with the terminal. Alternatively, both the first beam and the second beam are used for data transmission with the terminal, and the same information content is sent to the terminal through the first beam and second beam, so as to reduce interference during data transmission.

In step 306, the terminal sends a beam measurement result report.

Optionally, a method for the terminal to send the beam measurement result report include but are not limited to periodic reporting, semi static reporting, or non-periodic reporting. Optionally, the beam measurement result report can be uplink control information (UCI). The UCI can be reported through a physical uplink control channel (PUCCH) or a physical uplink shared channel (PUSCH).

Optionally, the method for sending the beam measurement result report is indicated by the network device, for example, by a combination of one or more of RRC signaling, medium access control (MAC) signaling, and downlink control information (DCI) signaling.

In an embodiment of the disclosure, in addition to the measurement result of the beam, the beam measurement result report also includes an identification of the beam. Optionally, the identification of the beam includes an identification of a reference signal corresponding to the beam. Optionally, the identification of the beam also includes at least one of a cell identification corresponding to the beam and a TRP identification corresponding to the beam.

Optionally, the beam measurement result report also includes first indication information. In a possible embodiment, the first indication information is used to indicate beams transmitted simultaneously using filters in the same spatial domain of the terminal; and/or, the first indication information is used to indicate beams transmitted simultaneously using filters in different spatial domains of the terminal.

For example, filters in the spatial domain include a receiving filter and a sending filter. In an embodiment of the disclosure, the first indication information includes an identification of a receiving filter of the terminal corresponding to the beam. Based on the identification of the receiving filter of the terminal corresponding to the beam, the network device can identify which beam terminals support simultaneous transmission using the same receiving filter and which beam terminals support simultaneous transmission using different receiving filters.

In another possible implementation, the first indication information is used to indicate beams transmitted simultaneously using the same antenna panel of the terminal; and/or, the first indication information is used to indicate beams transmitted simultaneously using different antenna panels of the terminal.

For example, the first indication information includes an identification of an antenna panel of the terminal corresponding to the beam. Based on the identification of the antenna panel of the terminal corresponding to the beam, the network device can identify which beam terminals support simultaneous transmission using the same antenna panel and which beam terminals support simultaneous transmission using different antenna panels.

In an embodiment of the disclosure, the beam measurement result report is a group-based beam measurement result report. The group-based beam measurement result report includes a beam measurement result report of at least one beam group, with each beam group including at least two beams. Alternatively, the group-based beam measurement result report includes beam measurement result reports of at least two beam groups, with each beam group including at least one beam. That is, the beam measurement result report includes beam measurement result reports of at least two beams, and at least one beam of the at least two beams is a beam of the neighbor cell of the terminal.

In an embodiment of the disclosure, the beam measurement result report includes identifications of M reference signals and measurement values of the M reference signals. The M reference signals are M reference signals of reference signals sent through the N reference signal resources, and M is an integer greater than 0 and M is not greater than N. As mentioned above, for a certain reference signal sent by the network device, the terminal may receive the reference signal, may fail to receive the reference signal, or a received power may be too low. Therefore, the number of identifications of reference signals in the beam measurement result report is less than or equal to the number of reference signals sent by the network device, that is, M is less than or equal to N.

In some examples, the group-based beam measurement result report includes a beam measurement result report of at least one beam group, with each beam group including at least two beams. The beams within each beam group are beams that are supported to be simultaneously transmitted by the terminal.

For example, the beam measurement result report includes beam measurement results of three beam groups. Beam group 1 includes beam 11 and beam 12, beam group 2 includes beam 21 and beam 22, and beam group 3 includes beam 31. Beams 11 and 12 are beams that are supported to be simultaneously transmitted by the terminal, while beams 21 and 22 are beams that are supported to be simultaneously transmitted by the terminal.

Optionally, in this case, the beams from different beam groups are beams that are not supported to be simultaneously transmitted by the terminal.

In other examples, the group-based beam measurement result report includes beam measurement result reports of at least two beam groups. Beams from different beam groups are beams that are supported to be simultaneously transmitted by the terminal.

For example, according to an order in which measurement result reports of beams are arranged in a beam measurement result report of a corresponding beam group, beams at the same position in beam measurement result reports of different beam groups are the beams that are supported to be simultaneously transmitted by the terminal.

For example, the beam measurement result report includes beam measurement results reports for two beam groups. Beam group 1 includes beam 11 and beam 12, and beam group 2 includes beam 21 and beam 22. A beam measurement result report of beam 11 is ranked first in a beam measurement result report of a beam group to which beam 11 belongs, and a beam measurement result report of beam 21 is ranked first in a beam measurement result report of a beam group to which beam 21 belongs. Therefore, beam 11 and beam 21 are beams that are supported to be simultaneously transmitted by the terminal. Similarly, beam 12 and beam 22 are beams that are supported to be simultaneously transmitted by the terminal.

For example, there is a beam in a beam group and the terminal does not support to transmit the beam and any other beam simultaneously, thus, a beam measurement result report at a position corresponding to this beam in a beam measurement result report of other beam groups is null.

Optionally, in this case, the beams within each beam group are beams that are not supported to be simultaneously transmitted by the terminal.

In some other examples, the group-based beam measurement result report includes a beam measurement result report of at least one beam group, each beam group including beams received by the same spatial filter of the terminal, or each beam group including beams received by the same antenna panel of the terminal.

In this case, the beam measurement result report also includes second indication information. The second indication information is used to indicate beams that are supported to be simultaneously transmitted by the terminal. Optionally, the second indication information is also used to indicate beams that are not supported to be simultaneously transmitted by the terminal.

In an embodiment of the disclosure, at least two beams that are supported to be simultaneously transmitted correspond to at least two different TRPs. The at least two TRPs correspond to the same serving cell, or the at least two TRPs include a TRP corresponding to a serving cell and a TRP corresponding to a neighbor cell, or the at least two TRPs correspond to the same neighbor cell.

In step 307, the network device receives the beam measurement result report.

After receiving the beam measurement result report sent by the terminal, the network device selects appropriate beams for performing data transmission with the terminal based on at least two beams that are supported to be simultaneously transmitted by the terminal indicated in the beam measurement result report, thereby improving the throughput of the terminal.

In an embodiment of the disclosure, by including a beam measurement result report of at least one beam of the neighbor cell in the beam measurement result report, the network device can dynamically perform beam switch between beams of the serving cell and beams of the neighbor cell based on the beam measurement result report of the serving cell and the beam measurement result report of the neighbor cell in the beam measurement result report, thereby improving the data transmission performance of the terminal.

In some embodiments, at least two TRPs corresponding to the at least two beams that are supported to be simultaneously transmitted by the terminal correspond to the same serving cell. In this case, communication performance of the serving cell is good, and the network device selects a beam of the serving cell with good performance based on the beam measurement result report to perform data transmission with the terminal.

In other embodiments, the at least two TRPs corresponding to the at least two beams that are supported to be simultaneously transmitted by the terminal include a TRP corresponding to the serving cell and a TRP corresponding to the neighbor cell. In this case, the terminal is generally located at the edge of the serving cell, and located in an overlapping area of a coverage of the serving cell and a coverage of the neighbor cell. The network device uses both the beam of the serving cell and the beam of the neighbor cell to perform data transmission with the terminal, thereby improving transmission performance. Moreover, when a result obtained by performing the beam measurement by the terminal are unstable, for example, there is not much difference between a beam measurement result corresponding to the serving cell and a beam measurement result corresponding to the neighbor cell in a beam measurement result measured by a certain antenna panel of the terminal, and the beam measurement result corresponding to the serving cell are better than the beam measurement result corresponding to the neighbor cell for a period of time, while the beam measurement result corresponding to the neighbor cell are better than the beam measurement result corresponding to the serving cell for another period of time, the network device uses both the beam of the serving cell and the beam of the neighbor cell to perform data transmission with the terminal. On the one hand, it can improve the throughput of the terminal, and on the other hand, it does not require the terminal to switch back and forth between the serving cell and the neighbor cell, which is beneficial for saving signaling costs and reducing latency.

In other embodiments, the at least two TRPs corresponding to the at least two beams that are supported to be simultaneously transmitted by the terminal correspond to the same neighbor cell. In this case, the terminal is generally located at the edge of the serving cell, and the performance of data transmission through the neighbor cell is better than that through the serving cell. The terminal can switch from the serving cell to the neighbor cell. The network device that the neighbor cell belongs to can quickly use high-performance beams to perform data transmission with the terminal based on the measurement result of the beam corresponding to the neighbor cell, convenient for fast cell handover. Alternatively, the network device can use the beam of the neighbor cell to perform data transmission with the terminal, ensuring the throughput of the terminal while avoiding the ping pong effect caused by frequent handover.

FIG. 5 is a schematic diagram of an apparatus for sending a beam measurement result report according to an embodiment of the disclosure. The apparatus has a function of realizing the terminal in the above method embodiments. The function can be realized by hardware or by implementing corresponding software by hardware. As illustrated in FIG. 5, the apparatus 500 includes a sending module 501.

The sending module 501 is configured to send a beam measurement result report, in which the beam measurement result report includes a beam measurement result report of at least one beam group, and at least one beam in the at least one beam group corresponds to a neighbor cell of a terminal.

Optionally, at least two beams within one beam group in the at least one beam group are supported to be simultaneously transmitted by the terminal.

Optionally, the at least two beams within the one beam group in the at least one beam group correspond to at least two different transmission and reception points TRPs, and the at least two TRPs correspond to a same serving cell, or the at least two TRPs include a TRP corresponding to a serving cell and a TRP corresponding to the neighbor cell, or the at least two TRPs correspond to the neighbor cell.

Optionally, the beam measurement result report includes beam measurement result reports of at least two beam groups, and beams from different beam groups in the at least two beam groups are supported to be simultaneously transmitted by the terminal.

Optionally, the beam group includes beams received by a same antenna panel of the terminal.

Optionally, the beam measurement result report includes first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

Optionally, the first indication information includes an identification of an antenna panel of the terminal corresponding to a beam.

Optionally, the measurement result report includes an identification of a beam and a measurement result of the beam, the identification of the beam includes an identification of a reference signal corresponding to the beam.

Optionally, the identification of the beam includes at least one of a cell identification corresponding to the beam and a TRP identification corresponding to the beam.

Optionally, the measurement result of the beam includes at least one of a layerl-reference signal received power L1-RSRP and a layerl-signal to interference plus noise ratio L1-SINR.

Optionally, the measurement result of the beam includes interference indication information, and the interference indication information is configured to indicate an interference situation between at least two beams within a same beam group.

Optionally, the interference indication information includes: first interference indication information for indicating an interference situation that a first beam suffers interferences including interference from a second beam, and/or second interference indication information for indicating an interference situation that the first beam suffers interferences other than the interference from a second beam, the first beam being any one of the at least two beams, the second beam being another one of the at least two beams other than the first beam.

Optionally, the apparatus further includes:
a receiving module 502, configured to receive beam report configuration information, in which the beam report configuration information is configured to instruct the terminal to give priority to sending a beam measurement result report of a first beam group, the first beam group including beams of different TRPS, or the first beam group including beams of different cells, or the first beam group including beams of a same TRP.

FIG. 6 is a schematic diagram of an apparatus for receiving a beam measurement result report according to an embodiment of the disclosure. The apparatus has a function of realizing the network device in the above method embodiments. The function can be realized by hardware or by implementing corresponding software by hardware. As illustrated in FIG. 6, the apparatus 600 includes a receiving module 601.

The receiving module 601 is configured to receive a beam measurement result report, in which the beam measurement result report includes a beam measurement result report of at least one beam group, and at least one beam in the at least one beam group corresponds to a neighbor cell of a terminal.

Optionally, at least two beams within one beam group in the at least one beam group are supported to be simultaneously transmitted by the terminal.

Optionally, the at least two beams within the one beam group in the at least one beam group correspond to at least two different transmission and reception points TRPs, and the at least two TRPs correspond to a same serving cell, or the at least two TRPs include a TRP corresponding to a serving cell and a TRP corresponding to the neighbor cell, or the at least two TRPs correspond to the neighbor cell.

Optionally, the beam measurement result report includes beam measurement result reports of at least two beam groups, and beams from different beam groups in the at least two beam groups are supported to be simultaneously transmitted by the terminal.

Optionally, the beam group includes beams received by a same antenna panel of the terminal.

Optionally, the beam measurement result report includes first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

Optionally, the first indication information includes an identification of an antenna panel of the terminal corresponding to a beam.

Optionally, the measurement result report includes an identification of a beam and a measurement result of the beam, the identification of the beam includes an identification of a reference signal corresponding to the beam.

Optionally, the identification of the beam includes at least one of a cell identification corresponding to the beam and a TRP identification corresponding to the beam.

Optionally, the measurement result of the beam includes at least one of a layerl-reference signal received power L1-RSRP and a layerl-signal to interference plus noise ratio L1-SINR.

Optionally, the measurement result of the beam includes interference indication information, and the interference indication information is configured to indicate an interference situation between at least two beams supported to be simultaneously transmitted by the terminal.

Optionally, the interference indication information includes: first interference indication information for indicating an interference situation that a first beam suffers interferences including interference from a second beam, and/or second interference indication information for indicating an interference situation that the first beam suffers interferences other than the interference from a second beam, the first beam being any one of the at least two beams, the second beam being another one of the at least two beams other than the first beam.

Optionally, the apparatus further includes:
a sending module 602, configured to send beam report configuration information, in which the beam report configuration information is configured to instruct the terminal to give priority to sending a beam measurement result report of a first beam group, the first beam group including beams of different TRPS, or the first beam group including beams of different cells, or the first beam group including beams of a same TRP.

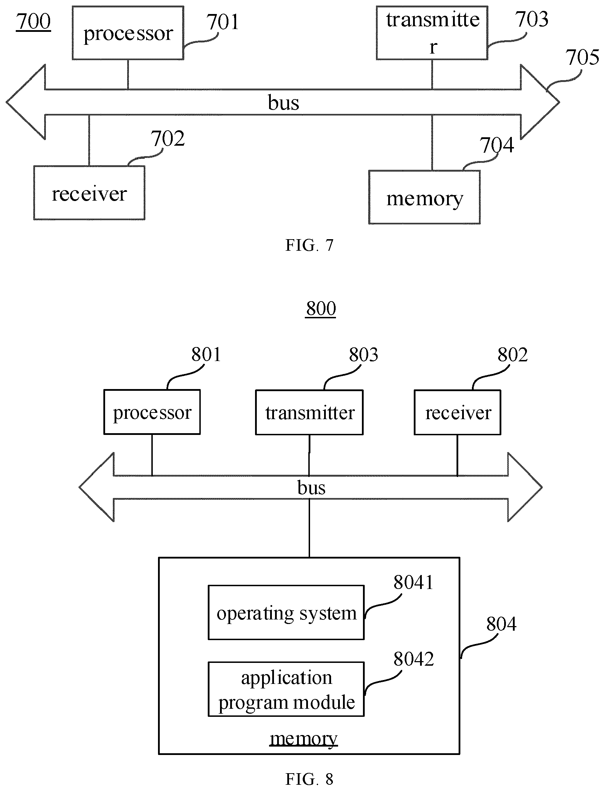

FIG. 7 is a block diagram of a terminal according to an embodiment of the disclosure. As illustrated in FIG. 7, the terminal may include a processor 701, a receiver 702, a transmitter 703, a memory 704, and a bus 705.

The processor 701 includes one or more processing cores. The processor 701 executes various functional applications and information processing by running software programs and modules.

The receiver 702 and the transmitter 703 can be implemented as a communication component, which can be a communication chip.

The memory 704 is connected to the processor 701 through the bus 705.

The memory 704 may be used to store at least one instruction, and the processor 701 may be used to execute the at least one instruction to implement the method for sending a beam measurement result report provided by the embodiments of the disclosure.

In addition, the memory 704 may be implemented by any type of temporary or non-temporary storage devices or their combination, such as a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, a programmable read-only memory (PROM), etc.

In an exemplary embodiment, a computer-readable storage medium is also provided. The computer-readable storage medium stores at least one instruction, at least one program, a code set or an instruction set. The at least one instruction, the at least one program, the code set or the instruction set is loaded and executed by the processor to implement the method for sending a beam measurement result report provided by the above method embodiments.

FIG. 8 is a block diagram of a network device according to an embodiment of the disclosure. As illustrated in FIG. 8, the network device may include a processor 801, a receiver 802, a transmitter 803, and a memory 804. The receiver 802, the transmitter 803, and the memory 804 are connected to the processor 801 through a bus 805, respectively.

The processor 801 includes one or more processing cores. The processor 801 executes the method for receiving a beam measurement result report provided by the method embodiments of the disclosure by running software programs and modules. The memory 804 is configured to the software programs and modules. In detail, the memory 804 may store an operating system 8041, and an application program module 8042 required by at least one function. The receiver 802 is configured to receive communication data sent by other devices, and the transmitter 803 is used to send communication data to other devices.

In an exemplary embodiment, a computer-readable storage medium is also provided. The computer-readable storage medium stores at least one instruction, at least one program, a code set or an instruction set. The at least one instruction, the at least one program, the code set or the instruction set is loaded and executed by the processor to implement the method for receiving a beam measurement result report provided by the above method embodiments.

In an exemplary embodiment, a communication system is also provided. The communication system includes a terminal and a network device. The terminal is the terminal provided in the embodiment shown in FIG. 7. The network device is the network device provided in the embodiment shown in FIG. 8.

After considering the specification and practicing the disclosure herein, those skilled in the art will easily think of other embodiments of the present application. The present application is intended to cover any variations, usages, or adaptive changes of the present application. These variations, usages, or adaptive changes follow the general principles of the present application and include common knowledge or conventional technical means in the technical field not disclosed by the present application. The description and the embodiments are to be regarded as exemplary only, and the true scope and spirit of the present application are given by the appended claims.

It should be understood that the present disclosure is not limited to the precise structure described above and shown in the drawings, and various modifications and changes may be made without departing from its scope. The scope of the present application is only limited by the appended claims.

## Claims

1. A method for sending a beam measurement result report, comprising:
sending a beam measurement result report, wherein the beam measurement result report comprises a beam measurement result report of at least one beam group, and at least one beam in the at least one beam group corresponds to a neighbor cell of a terminal.

2. The method of claim 1, wherein at least two beams within one beam group in the at least one beam group are supported to be simultaneously transmitted by the terminal.

3. The method of claim 2, wherein the at least two beams within the one beam group in the at least one beam group correspond to at least two different transmission and reception points TRPs, and the at least two TRPs correspond to a same serving cell, or the at least two TRPs comprise a TRP corresponding to a serving cell and a TRP corresponding to the neighbor cell, or the at least two TRPs correspond to the neighbor cell.

4. The method of claim 1, wherein the beam measurement result report comprises beam measurement result reports of at least two beam groups, and beams from different beam groups in the at least two beam groups are supported to be simultaneously transmitted by the terminal.

5. The method of claim 1, wherein the beam group comprises beams received by a same antenna panel of the terminal.

6. The method of any of claims 1 to 5, wherein the beam measurement result report comprises first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

7. The method of claim 6, wherein the first indication information comprises an identification of an antenna panel of the terminal corresponding to a beam.

8. The method of any of claims 1 to 5, wherein the measurement result report comprises an identification of a beam and a measurement result of the beam, the identification of the beam comprises an identification of a reference signal corresponding to the beam.

9. The method of claim 8, wherein the identification of the beam comprises at least one of a cell identification corresponding to the beam and a TRP identification corresponding to the beam.

10. The method of claim 8, wherein the measurement result of the beam comprises at least one of a layerl-reference signal received power L1-RSRP and a layerl-signal to interference plus noise ratio L1-SINR.

11. The method of claim 10, wherein the measurement result of the beam comprises interference indication information, and the interference indication information is configured to indicate an interference situation between at least two beams within a same beam group.

12. The method of claim 11, wherein the interference indication information comprises: first interference indication information for indicating an interference situation that a first beam suffers interferences comprising interference from a second beam, and/or second interference indication information for indicating an interference situation that the first beam suffers interferences other than the interference from a second beam, the first beam being any one of the at least two beams, the second beam being another one of the at least two beams other than the first beam.

13. The method of any of claims 1 to 5, claim 7, or claims 9 to 12, further comprising: receiving beam report configuration information, wherein the beam report configuration information is configured to instruct the terminal to give priority to sending a beam measurement result report of a first beam group, the first beam group comprising beams of different TRPS, or the first beam group comprising beams of different cells, or the first beam group comprising beams of a same TRP.

14. A method for receiving a beam measurement result report, comprising:
receiving a beam measurement result report, wherein the beam measurement result report comprises a beam measurement result report of at least one beam group, and at least one beam in the at least one beam group corresponds to a neighbor cell of a terminal.

15. The method of claim 14, wherein at least two beams within one beam group in the at least one beam group are supported to be simultaneously transmitted by the terminal.

16. The method of claim 15, wherein the at least two beams within the one beam group in the at least one beam group correspond to at least two different transmission and reception points TRPs, and the at least two TRPs correspond to a same serving cell, or the at least two TRPs comprise a TRP corresponding to a serving cell and a TRP corresponding to the neighbor cell, or the at least two TRPs correspond to the neighbor cell.

17. The method of claim 14, wherein the beam measurement result report comprises beam measurement result reports of at least two beam groups, and beams from different beam groups in the at least two beam groups are supported to be simultaneously transmitted by the terminal.

18. The method of claim 14, wherein the beam group comprises beams received by a same antenna panel of the terminal.

19. The method of any of claims 14 to 18, wherein the beam measurement result report comprises first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

20. The method of claim 19, wherein the first indication information comprises an identification of an antenna panel of the terminal corresponding to a beam.

21. The method of any of claims 14 to 18, wherein the measurement result report comprises an identification of a beam and a measurement result of the beam, the identification of the beam comprises an identification of a reference signal corresponding to the beam.

22. The method of claim 21, wherein the identification of the beam comprises at least one of a cell identification corresponding to the beam and a TRP identification corresponding to the beam.

23. The method of claim 21, wherein the measurement result of the beam comprises at least one of a layer1-reference signal received power L1-RSRP and a layerl-signal to interference plus noise ratio L1-SINR.

24. The method of claim 23, wherein the measurement result of the beam comprises interference indication information, and the interference indication information is configured to indicate an interference situation between at least two beams supported to be simultaneously transmitted by the terminal.

25. The method of claim 24, wherein the interference indication information comprises: first interference indication information for indicating an interference situation that a first beam suffers interferences comprising interference from a second beam, and/or second interference indication information for indicating an interference situation that the first beam suffers interferences other than the interference from a second beam, the first beam being any one of the at least two beams, the second beam being another one of the at least two beams other than the first beam.

26. The method of any of claims 14 to 18, claim 20 or claims 22 to 25, further comprising: sending beam report configuration information, wherein the beam report configuration information is configured to instruct the terminal to give priority to sending a beam measurement result report of a first beam group, the first beam group comprising beams of different TRPS, or the first beam group comprising beams of different cells, or the first beam group comprising beams of a same TRP.

27. An apparatus for sending a beam measurement result report, comprising:
a sending module, configured to send a beam measurement result report, wherein the beam measurement result report comprises a beam measurement result report of at least one beam group, and at least one beam in the at least one beam group corresponds to a neighbor cell of a terminal.

28. The apparatus of claim 27, wherein at least two beams within one beam group in the at least one beam group are supported to be simultaneously transmitted by the terminal.

29. The apparatus of claim 28, wherein the at least two beams within the one beam group in the at least one beam group correspond to at least two different transmission and reception points TRPs, and the at least two TRPs correspond to a same serving cell, or the at least two TRPs comprise a TRP corresponding to a serving cell and a TRP corresponding to the neighbor cell, or the at least two TRPs correspond to the neighbor cell.

30. The apparatus of claim 27, wherein the beam measurement result report comprises beam measurement result reports of at least two beam groups, and beams from different beam groups in the at least two beam groups are supported to be simultaneously transmitted by the terminal.

31. The apparatus of claim 27, wherein the beam group comprises beams received by a same antenna panel of the terminal.

32. The apparatus of any of claims 27 to 31, wherein the beam measurement result report comprises first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

33. The apparatus of claim 32, wherein the first indication information comprises an identification of an antenna panel of the terminal corresponding to a beam.

34. The apparatus of any of claims 27 to 31, wherein the measurement result report comprises an identification of a beam and a measurement result of the beam, the identification of the beam comprises an identification of a reference signal corresponding to the beam.

35. The apparatus of claim 34, wherein the identification of the beam comprises at least one of a cell identification corresponding to the beam and a TRP identification corresponding to the beam.

36. The apparatus of claim 34, wherein the measurement result of the beam comprises at least one of a layer1-reference signal received power L1-RSRP and a layerl-signal to interference plus noise ratio L1-SINR.

37. The apparatus of claim 36, wherein the measurement result of the beam comprises interference indication information, and the interference indication information is configured to indicate an interference situation between at least two beams within a same beam group.

38. The apparatus of claim 36, wherein the interference indication information comprises: first interference indication information for indicating an interference situation that a first beam suffers interferences comprising interference from a second beam, and/or second interference indication information for indicating an interference situation that the first beam suffers interferences other than the interference from a second beam, the first beam being any one of the at least two beams, the second beam being another one of the at least two beams other than the first beam.

39. The apparatus of any of claims 27 to 31, claim 33, or claims 35 to 38, further comprising:
a receiving module, configured to receive beam report configuration information, wherein the beam report configuration information is configured to instruct the terminal to give priority to sending a beam measurement result report of a first beam group, the first beam group comprising beams of different TRPS, or the first beam group comprising beams of different cells, or the first beam group comprising beams of a same TRP.

40. An apparatus for receiving a beam measurement result report, comprising:
a receiving module, configured to receive a beam measurement result report, wherein the beam measurement result report comprises a beam measurement result report of at least one beam group, and at least one beam in the at least one beam group corresponds to a neighbor cell of a terminal.

41. The apparatus of claim 40, wherein at least two beams within one beam group in the at least one beam group are supported to be simultaneously transmitted by the terminal.

42. The apparatus of claim 41, wherein the at least two beams within the one beam group in the at least one beam group correspond to at least two different transmission and reception points TRPs, and the at least two TRPs correspond to a same serving cell, or the at least two TRPs comprise a TRP corresponding to a serving cell and a TRP corresponding to the neighbor cell, or the at least two TRPs correspond to the neighbor cell.

43. The apparatus of claim 40, wherein the beam measurement result report comprises beam measurement result reports of at least two beam groups, and beams from different beam groups in the at least two beam groups are supported to be simultaneously transmitted by the terminal.

44. The apparatus of claim 40, wherein the beam group comprises beams received by a same antenna panel of the terminal.

45. The apparatus of any of claims 40 to 44, wherein the beam measurement result report comprises first indication information, the first indication information is configured to indicate beams transmitted simultaneously using filters in a same spatial domain of the terminal or using a same antenna panel of the terminal; and/or, the first indication information is configured to indicate beams transmitted simultaneously using filters in different spatial domains of the terminal or using different antenna panels of the terminal.

46. The apparatus of claim 45, wherein the first indication information comprises an identification of an antenna panel of the terminal corresponding to a beam.

47. The apparatus of any of claims 40 to 44, wherein the measurement result report comprises an identification of a beam and a measurement result of the beam, the identification of the beam comprises an identification of a reference signal corresponding to the beam.

48. The apparatus of claim 47, wherein the identification of the beam comprises at least one of a cell identification corresponding to the beam and a TRP identification corresponding to the beam.

49. The apparatus of claim 47, wherein the measurement result of the beam comprises at least one of a layer1-reference signal received power L1-RSRP and a layerl-signal to interference plus noise ratio L1-SINR.

50. The apparatus of claim 49, wherein the measurement result of the beam comprises interference indication information, and the interference indication information is configured to indicate an interference situation between at least two beams supported to be simultaneously transmitted by the terminal.

51. The apparatus of claim 50, wherein the interference indication information comprises: first interference indication information for indicating an interference situation that a first beam suffers interferences comprising interference from a second beam, and/or second interference indication information for indicating an interference situation that the first beam suffers interferences other than the interference from a second beam, the first beam being any one of the at least two beams, the second beam being another one of the at least two beams other than the first beam.

52. The apparatus of any of claims 40 to 44, claim 46 or claims 48 to 51, further comprising:
a sending module, configured to send beam report configuration information, wherein the beam report configuration information is configured to instruct the terminal to give priority to sending a beam measurement result report of a first beam group, the first beam group comprising beams of different TRPS, or the first beam group comprising beams of different cells, or the first beam group comprising beams of a same TRP.

53. A terminal, comprising:
a processor; and
a memory for storing instructions executable by the processor;
wherein the processor is configured to load and execute the executable instructions to implement the method for sending a beam measurement result report of any one of claims 1 to 13.

54. A network device, comprising:
a processor; and
a memory for storing instructions executable by the processor;
wherein the processor is configured to load and execute the executable instructions to implement the method for receiving a beam measurement result report of any one of claims 14 to 26.

55. A computer readable storage medium having executable instructions stored thereon that, when the executable instructions are loaded and executed by a processor to implement the receiving method of any one of claims 1 to 20.
